**Europäisches Patentamt**

**European Patent Office**

**Office européen des brevets**

(19)

(11) **EP 0 927 479 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.⁷: **H04L 25/02**, H01F 1/153, H01F 27/25, H01F 41/02

(21) Anmeldenummer: **97944721.6**

(22) Anmeldetag: **17.09.1997**

(86) Internationale Anmeldenummer:
**PCT/DE97/02093**

(87) Internationale Veröffentlichungsnummer:
**WO 98/12847 (26.03.1998 Gazette 1998/12)**

(54) **IMPULSÜBERTRAGER FÜR U-SCHNITTSTELLEN NACH DEM ECHOKOMPENSATIONSPRINZIP**

PULSE TRANSFORMER FOR LINE INTERFACES OPERATING ACCORDING TO THE ECHO COMPENSATION PRINCIPLE

TRANSFORMATEUR D'IMPULSIONS POUR INTERFACES EN U SELON LE PRINCIPE DE LA COMPENSATION D'ECHO

(84) Benannte Vertragsstaaten:
**AT BE CH DE DK ES FI FR GB GR IE IT LI NL PT SE**

(30) Priorität: **17.09.1996 DE 19637881**

(43) Veröffentlichungstag der Anmeldung:
**07.07.1999 Patentblatt 1999/27**

(73) Patentinhaber: **Vacuumschmelze GmbH**
**63450 Hanau (DE)**

(72) Erfinder:
• **PETZOLD, Jörg**
 **D-63486 Bruchköbel (DE)**
• **BEICHLER, Johannes**
 **D-63110 Rodgau (DE)**
• **BINKOFSKI, Johannes**
 **D-63517 Rodenbach (DE)**
• **HERZER, Giselher**
 **D-63486 Bruchköbel (DE)**
• **KLEESPIES, Volker**
 **D-63637 Jossgrund (DE)**
• **CAPRARELLA, Luigi**
 **D-63546 Hammersbach (DE)**
• **WINK, Holger**
 **D-63571 Geinhausen (DE)**

(74) Vertreter: **Patentanwälte**
**Westphal, Mussgnug & Partner**
**Waldstrasse 33**
**78048 Villingen-Schwenningen (DE)**

(56) Entgegenhaltungen:
 **EP-A- 0 084 138          EP-A- 0 086 485**
 **EP-A- 0 378 823**

• **SWIERCZEK ET AL.: "Influence of annealing on the magnetic properties of Co-based amorphous alloys" JOURNAL OF MAGNETISM AND MAGNETIC MATERIALS., Bd. 160, Juli 1996, AMSTERDAM NL, Seiten 295-296, XP000625270**
• **SHAIKH, WEXLER, DELAMORE: "Effect of annealing on the magnetic properties and microstructure of amorphous Co75 Si10 B15" JOURNAL OF MAGNETISM AND MAGNETIC MATERIALS, Bd. 152, Nr. 3, Januar 1996, Seiten 345-352, XP000546943**
• **NG ET AL.: "Amorphous alloy core distribution transformers" PROCEEDINGS OF THE IEEE., Bd. 79, Nr. 11, November 1991, NEW YORK, US, Seiten 1608-1622, XP000278310**

**Beschreibung**

Die Erfindung betrifft einen Impulsübertrager für U-Schnittstellen nach dem Echokompensationsprinzip und ein Verfahren zur Herstellung eines in Impulsübertragern für U-Schnittstellen enthaltenen Ringbandkerns.

In einem digitalen Telekommunikationssystem, insbesondere einem ISDN-Telekommunikationssystem, erfolgt die Verbindung zwischen einer digitalen Ortsvermittlungsstelle und dem Netzabschluß über eine öffentliche Zweidrahtleitung, an deren Enden sogenannte $U_{K0}$- oder $U_{HDSL}$-Übertrager sitzen. Ein solches ISDN-Telekommunikationssystem besteht dabei aus einem Netzabschluß (NTBA1), einer ISDN-Ortsvermittlung, einem $U_{K0}$-Übertrager, einer stromkompensierten Zweifachdrossel, einem integrierten Schaltkreis, der beispielsweise ein IEC PEB 2090 sein kann, sowie einer Stromversorgung mit einem DC/DC-Wandler.

Je nach Codierung und Pulsfolgefrequenz $f_0$ unterscheidet man bei der $U_{K0}$-Schnittstelle das 4B3T-System und das 2B1Q-System. Das 4B3T-System hat eine Pulsfolgefrequenz $f_0$ von 60 kHz und eine Codierung von 4 Bits auf 3 ternäre Symbole) Das 2B1Q-System hingegen weist eine Pulsfolgefrequenz $f_0$ von 40 kHz und eine Codierung von 2 Bits auf einen quaternären Zustand auf. Diese Unterschiede haben Auswirkungen auf die spektrale Verteilung des Magnetisierungsstromes des $U_{K0}$-Übertragers. Demnach ist im Spektrum des 2B1Q-Codes ein starker Anteil niederfrequenter Komponenten mit großer Stromamplitude, wogegen beim 4B3T-Code höherfrequente Komponenten dominieren. Im Falle einer $U_{K0}$-4B3T-Schnittstelle kann die Leitungslänge zwischen den Übertragern bis zu 5 km betragen. Bei der $U_{K0}$-2B1Q-Schnittstelle und der $U_{HDSL}$-Schnittstelle ist die Leitungslänge zwischen den Übertragern in der Regel etwas geringer. Die Fehlerquote der übertragenen $cos^2$-förmigen Pulse muß immer kleiner $10^{-7}$ sein.

Erschwerend kommt hinzu, daß den Informationspulsen Gleichströme zur Fernspeisung der Endteilnehmer überlager sind, die nach betrachtetem System (4B3T, 2B1Q) bis 80 mA, bei HDSL sogar noch mehr betragen können. Diese Versorgungsströme führen zu einer Gleichfeldvorbelastung $H_{dc}$ des Schnittstellenübertragermagnetkerns, deren Höhe entscheidend durch die Ausführungsform des Übertragermagnetkerns und des verwendeten Magnetkernwerkstoffs bestimmt wird. Eine grundsätzliche Bedingung ist dabei, daß die in den einschlägigen Normen festgelegten nachrichtentechnischen Kenngrößen, wie Impuls- und Impedanzmasken, auch unter der maximal möglichen bzw. unter wechselnder Gleichstromvorbelastung eingehalten werden müssen.

An die auf beiden Seiten der Strecke eingesetzten Schnittstellenübertrager sind die folgenden Anforderungen gestellt:

a) Minimales Bauvolumen,
b) Eignung für die Übertragungscodesysteme,

- 4B3T - $U_{K0}$ (vgl. FZT 1 TR 220 und ETSI-Norm ETR 80; 60 kHz, 120 kBaud)
- 2B1Q - $U_{K0}$ (vgl. ANSI - T1.601 und ETSI-Norm ETR 80; 40 kHz, 80 Baud)
- 2B1Q und CAP - HDSL (vgl. ETSI-Norm ETR 152; 2 Mbit/ sec)

c) Hauptinduktivitäten 1 bis 80 mH je nach beschaltetem integrierten Schaltkreis,
d) Gleichstromüberlagerung der Fernspeisung,

- 0 bis 60 mA bei 4B3T-Schnittstellenübertragern
- 0 bis 80 mA bei 2B1Q-Schnittstellenübertragern (freigestellt nach Anzieh-Norm)

e) Übertragungsreichweite > 8 km (bei 4B3T) bzw. 15 Loops nach ANSI (bei 2B1Q),
f) geringes Kerngewicht und SMD (Surface Mounted Device)-Fähigkeit.

Als Material für die Übertragerkerne wurden bisher Ferrite verwendet, insbesondere wurden Ferrite aus den Ferritwerkstoffen N27 und N28 eingesetzt. Die erforderliche Gleichstromvorbelastbarkeit wurde dabei mittels Scherung durch Schlitzen der Ferritringkerne erreicht. Durch diese starke Scherung des Magnetkreises wird die ursprünglich nichtlineare BH-Schleife des Ferritwerkstoffes so stark linearisiert, daß der Übertrager die geforderte Reichweite bzw. Bitfehlerrate erfüllt. Der Nachteil dabei ist, daß die Scherung einen Rückgang der effektiv wirksamen Permeabilität bis auf Werte um 200 bewirkt. Zum Erreichen der erforderlichen Hauptinduktivität von 1 bis 80 mH muß bei Ferritringkernen konstruktionsbedingt dann aber das Volumen sehr groß ausgelegt werden.

Ferner hat sich als Nachteil bei der Verwendung von Ferritringkernen herausgestellt, daß hohe Windungszahlen von primär- und sekundärseitiger Bewicklung erforderlich sind, die zu ohmschen Verlusten und kapazitiv bedingten Störeffekten führen können.

Weiterhin ist aus der EP 0 378 823 A2 ein Schnittstellenübertrager für eine $S_0$-Schnittstelle bekannt, der einen Magnetkern aus einer amorphen Kobaltbasislegierung mit einer Permeabilität zwischen 25 000 und 95 000 aufweist. Die Anisotropieenergien der aus der EP 0 378 823 A2 bekannten Legierungen liegen im Bereich von 5 $J/m^3$.

Die aus der EP 0 378 823 A2 bekannten Magnetkerne eignen sich nur für Schnittstellen mit einer Gleichstromvorbelastung im Bereich von 10 mA und einer Übertragungsreichweite bis zu 150 m.

Aufgabe der vorliegenden Erfindung ist es daher, einen gleichstromvorbelastbaren Schnittstellenübertrager für ein digitales Übertragungssystem anzugeben, der bei einem möglichst kleinen Bauvolumen einem einfachen Wicklungsaufbau und einer geringen Windungszahl eine hohe fehlerfreie Übertragungsreichweite im Bereich von einigen Kilometern und eine Gleichstromvorbelastbarkeit bis zu 100 mA aufweist, sowie ein Verfahren zur Herstellung eines Ringbandkerns für einen derartigen Schnittstellenübertrager anzugeben.

Erfindungsgemäß wird die Aufgabe durch einen gleichstromvorbelastbaren Schnittstellenübertrager mit einer Hauptinduktivität von 2 bis 80 mH und einer geringen Koppelkapazität für ein digitales Übertragungssystem mit einem Magnetkern mit Primär- und Sekundärwicklungen gelöst, welcher dadurch gekennzeichnet ist, daß der Magnetkern aus einer weichmagnetischen, zumindest zu 70% amorphen Legierung mit einer flachen, linearen BH-Schleife besteht und daß die Legierung eine Zusammensetzung hat, welche aus der Formel

$$Co_a(Fe_{1-c}Mn_c)_bNi_dM_eSi_xB_yC_z$$

wobei M eines oder mehrere Elemente aus der Menge V, Nb, Ta, Cr, Mo, W, Ge, P ist, die Indizes a bis z in Atom% angegeben sind und folgenden Bedingungen genügen:

$$40 \leq a \leq 82 \qquad 0 \leq e \leq 5$$

$$3 \leq b \leq 10 \qquad 0 \leq x \leq 15$$

$$0 \leq c \leq 1 \qquad 8 \leq y \leq 26$$

$$0 \leq d \leq 30 \qquad 0 \leq z \leq 3$$

mit der Maßgabe $15 < e + x + y + z < 30$.

Durch die Verwendung dieses amorphes ferromagnetischen Materials können Magnetkerne für Schnittstellenübertrager hergestellt werden, die sich durch ein sehr geringes Bauvolumen auszeichnen. Ferner kann bei diesen metallischen Magnetkernen auf eine hohe Wicklungszahl verzichtet werden, so daß es zu keinen nennenswerten ohmschen Verlusten und kapazitiv bedingten Störeffekten kommen kann.

Ganz besonders geeignet haben sich Legierungen erwiesen, die die obengenannte Zusammensetzung aufweisen mit folgenden Bedingungen:

$$50 \leq a \leq 82 \qquad e \leq 3$$

$$c \leq 0,5 \qquad x \geq 1$$

$$d \leq 20 \qquad y \leq 20$$

mit der Maßgabe $18 < e + x + y + z < 25$.

In einer bevorzugten Ausführung der vorliegenden Erfindung ist als Magnetkern ein Ringkern vorgesehen, insbesondere ein Ringbandkern. Wegen der besonderen eingangs erwähnten Eigenschaften der metallischen Legierung muß dieser Ringbandkern nicht geschlitzt werden. In bevorzugter Ausführung ist demnach der Ringbandkern ein ungeschlitzter Ringbandkern.

Vorzugsweise weist das Band des Ringbandkerns gemäß der vorliegenden Erfindung eine mittlere Rauhtiefe $R_a$ von Bandoberseite und Bandunterseite von weniger als 8% der Banddicke auf.

Der Erfindung liegt die Erkenntnis zugrunde, daß sich die Schnittstellenübertragereigenschaften am besten mit einer amorphen, nahezu magnetostriktionsfreien Kobalt-Basis-Legierung erreichen lassen, welche eine Sättigungsinduktion von mindestens 0,7 Tesla, vorzugsweise mehr als 0,8 Tesla, und eine BH-Schleife besitzt, und welche bis zu Feldstärken von mindestens 1 A/cm, vorzugsweise mehr als 2 A/cm, einen linearen Verlauf aufweist. Solche linearen BH-Schleifen können z. B. durch die nachfolgend beschriebenen Herstellungsverfahrensschritte erzielt werden.

Es wird ein amorphes ferromagnetisches Band aus einer Schmelze mittels Rascherstarrung gegossen, wobei die Zusammensetzung wie weiter oben beschrieben, gewählt wird. Das Verfahren der Rascherstarrung bzw. das Stranggießen mit Rascherstarrung ist hinlänglich bekannt. Die dabei verwendeten prinzipiellen Verfahrensschritte und Vorrichtungen sind beispielsweise in der DE 37 31 781 C1 eingehend beschrieben.

Das weichmagnetische amorphe Band wird danach auf einer speziellen Maschine spannungsfrei zu einem Ringkern gewickelt. Die Einstellung der magnetischen Eigenschaften, d. h. der linearen flachen BH-Schleife des Magnetkerns erfolgt dann durch eine spezielle Wärmebehandlung in einem Magnetfeld, das parallel zur Rotationssymmetrieachse eines Ringbandkerns steht, d. h. also senkrecht zur Bandrichtung.

Die Wärmebehandlung wird dann so vorgenommen, daß sich der Wert der Sättigungsmagnetostriktion $\lambda_S$ während der Wärmebehandlung um einen von der Legierungszusammensetzung abhängigen Betrag in positive Richtung verändert, bis er in den Bereich $|\lambda_S| < 0,5$ ppm, vorzugsweise $|\lambda_S| < 0,1$ ppm liegt. Wie der Tabelle 2 zu entnehmen ist, ist dies auch dann erreichbar, wenn der Betrag von $\lambda_S$ im as quenched Zustand des Bandes deutlich über diesen Wert liegt. Wichtig dabei ist je nach eingesetzter Legierung eine Bespülung des Magnetkerns mit Luft, einem reduzierenden oder passiven Schutzgas, so daß an den Bandoberflächen weder Oxidationen noch andere Reaktionen auftreten können. Die Kerne werden je nach eingesetzter Legierungszusammensetzung unter angelegtem Magnetfeld mit einer Rate von 1 bis 10 K/min auf Temperaturen zwischen 220°C und 400°C aufgeheizt, zwischen 0,5 und 48 Stunden im angelegten Magnetfeld in diesem Temperaturintervall gehalten und anschließend mit 0,1 bis 5 K/min wieder abgekühlt.

Anschließend werden die Kerne oberflächenpassiviert, beschichtet, wirbelgesintert oder in einem Trog verkapselt, mit dem Primär- bzw. Sekundärwicklungen versehen und ggf. im Bauelementgehäuse verklebt oder vergossen.

Die mit der vorliegenden Erfindung erzielbaren Kernabmessungen bzw. Kernmassen bei vorgegebenen Hauptinduktivitäten und Gleichstrombelastbarkeiten sind der folgenden Tabelle 1 zu entnehmen.

Tab. 1

| $L_{haupt}$ [mH] | $I_{dc,max}$ [mA] | Kernabmessung [mm³] | Kernmasse [g] |
|---|---|---|---|
| 5.2 | 100 | $9.8 \times 6.5 \times 4.5$ | 1.19 |
| 5.2 | 60 | $7.4 \times 5.0 \times 3.0$ | 0.45 |
| 5.2 | 44 | $7.0 \times 5.0 \times 2.0$ | 0.24 |
| 6.0 | 80 | $9.8 \times 6.5 \times 4.5$ | 1.18 |
| 7.0 | 60 | $9.8 \times 6.5 \times 4.5$ | 1.18 |
| 10 | 60 | $8.2 \times 5.0 \times 4.0$ | 0.84 |
| 10 | 35 | $8.0 \times 6.0 \times 2.0$ | 0.28 |
| 13 | 60 | $9.0 \times 5.0 \times 4.0$ | 1.12 |
| 13 | 33 | $8.0 \times 6.0 \times 2.5$ | 0.35 |
| 26 | 60 | $11.0 \times 6.5 \times 5.7$ | 2.24 |
| 26 | 30 | $7.5 \times 5.5 \times 4.5$ | 0.58 |
| 50 | 60 | $14.0 \times 6.5 \times 5.7$ | 4.37 |
| 50 | 30 | $9.6 \times 6.5 \times 4.5$ | 1.12 |
| 80 | 60 | $17.0 \times 6.5 \times 5.7$ | 7.01 |
| 80 | 30 | $10.1 \times 5.0 \times 4.5$ | 1.73 |

Für die Induktivität des Übertragers gilt der Zusammenhang

$$L = N^2 \mu_o \mu_r A_{fe}/l_{fe} \qquad (1)$$

N = Windungszahl

$\mu_o$ = universelle Permeabilitätskonstante

$\mu_r$ = Permeabilität des Materials

$A_{fe}$ = Eisenquerschnitt des Kerns

$l_{fe}$ = Eisenweglänge des Kerns.

Aus Glchg. (1) wird ersichtlich, daß die erforderliche Induktivität bei minimalem Bauvolumen nur dann erreichbar ist, wenn Windungszahlen, Permeabilität, Kernquerschnitt und Eisenweglänge aufeinander abgestimmt sind. Die Permeabilität des Kernmaterials ist neben der günstigen ringförmigen Geometrie der ausschlaggebende Parameter für eine möglichst kompakte Abmessung des Übertragers. Bei den in Frage kommenden Legierungen liegt $\mu_r$ je nach durchgeführter Querfeldwärmebehandlung zwischen 500 und 5000. Gegenüber einem geschlitzten Ferritkern mit $\mu_r$ = 100 - 400 entsteht bedingt durch die gewählte Ringkernkonstruktion selbst bei einem niedrigen $\mu$- Wert von 500 ein starker Volumenvorteil.

Bei der Auswahl des Kernwerkstoffes entsteht eine grundsätzliche Einschränkung bereits dadurch, daß dem zu übertragenden Informationssignal ein Gleichstrom zur Fernspeisung der Teilnehmergeräte überlagert ist, der bei 4B3T- Übertragern typischerweise bis zu $I_{dc}$ = 60 mA betragen kann. Dieser Gleichstrom führt zu einer Gleichfeldvorbelastung

$$H_{dc} = I_{dc}N / l_{fe} \qquad (2)$$

unter der die Permeabilität nur sehr geringfügig abfallen darf. Aus diesem Grunde erfolgt die Beurteilung des Materials anhand von $\mu$ ($H_{dc}$) - Kennlinien.

Damit der Übertrager die mit der Echokompensationsmethode erzielte Reichweite normgerecht einhalten kann, muß die $\mu$(Hdc)-Kennlinie hinreichend konstant verlaufen. Dabei hängt es von der Amplitude des zu übertragenden Signals ab welcher Bereich und welche Form der $\mu$(Hdc)-Kennlinie hier zugrunde gelegt werden muß.

Dabei sind die niederfrequenten Anteile des 4B3T- Spektrums nur wenig ausgeprägt. Demzufolge wird die Lage des Arbeitspunktes des höherfrequenten Nutzsignals nur schwach durch den niederfrequenten Jitter hoher Amplitude beeinflußt. Stattdessen bestimmen niederfrequente schaltungsinterne Störungen, z.B. die Taktfrequenz des meist in der Anwenderschaltung vorhandenen DC-DC-Wandlers neben der Gleichstromvorbelastung die Lage des Arbeitspunktes des Signals auf der $\mu$(Hdc)- Kennlinie und dessen Jitter. Wenn die Amplitude des niederfrequenten Störsignales relativ klein ist, spielt die Charakteristik des Kleinfeldbereiches bei der zu kleinen Aussteuerungen gehörenden Kurvenform der $\mu$(Hdc)-Kennlinie die entscheidende Rolle. Dieser verläuft in amorphen Kernen praktisch waagerecht, solange

- das Band hinreichend glatt ist
- das Band nicht in unkontrollierter Weise ankristallisiert ist
- die mittels Querfeldtemperung erzeugte Queranisotropie exakt parallel zur Kernachse liegt
- die Sätfcigungsmagnetostriktion praktisch verschwindet
- der Kern spannungsfrei gewickelt ist.

Werden dagegen die genannten Bedingungen unzureichend eingehalten, so wächst infolge magnetischer Nachwirkung in der Kennlinie eine Mulde, die mit zunehmender Abweichung vom Idealzustand immer tiefer wird. Die Modulation des Arbeitspunktes durch niederfrequente Störsignale führt dann zu einer Verzerrung des zu übertragenden Codes, wodurch durch Störung der Echokompensation Bitfehler entstehen.

Beim 2B1Q-Code wird aufgrund der wesentlich größeren Aussteuerung des Übertragerkerns der gekrümmte Verlauf im Kleinfeldbereich ausgemittelt und verliert an Bedeutung. Stattdessen bestimmen die für große Aussteuerungen gültigen Verläufe der Kennlinie das Übertragungsverhalten. Der Einfluß der o.g. Herstellbedingungen und Materialeigenschaften geht dabei in der dort dargestellten Weise in den Verlauf der Kennlinie ein. Befindet sich der Arbeitspunkt im steilen Bereich einer der Kennlinien so werden die Verhältnisse für die Signalübertragung (40 - 60 kHz) je nach Oberflächenbeschaffenheit mehr oder weniger stark durch einen durch niederfrequente Signalanteile erzeugten Jitter beeinflußt.

Hinreichend gute Bitfehlerraten, die letztlich die Reichweite des Übertragers festlegen, lassen sich dann erreichen, wenn

1) der Betrag der Sättigungsmagnetostriktion $\lambda_s$ des wärmebehandelten Magnetkerns oder Bandes zumindest kleiner ist als $0,5 * 10^{-6}$ (vorzugsweise $< 0,1*10^{-6}$) und der Kern spannungsfrei gewickelt ist.

2) Die gemeinsame mittlere Rauhtiefe $R_a$ (nach DIN 4762) von Bandober- und Bandunterseite zumindest weniger als 8% der Banddicke, vorzugsweise weniger als 2,5 % beträgt.

3) Die mittels DSC (Aufheizrate 10 K/min) ermittelte Kristallisationstemperatur oberhalb von 410 °C, vorzugsweise über 430 °C liegt.

4) Die Mulde in der Kennlinie beim 4B3T- Code durch gezielte Übermodulation abgeflacht wird, was durch eine möglichst knappe Auslegung des Kernvolumens möglich wird. Dagegen sind beim 2B1Q- Code möglichst große Kernvolumina anzustreben um die Wirkung des steilen Bereiches der Kennlinie abzuschwächen.

5) Bei der Feldwärmebehandlung der störende Einfluß radialer Streufelder möglichst klein gehalten wird. Maßnahmen sind z.B. die Bildung hinreichend langer Kernstapel in Feldrichtung, Abschirmung gegen äußere Felder, Vermeidung einer Verkippung der Achse des Kernstapels gegen die Symmetrieachse des Feldes.

6) Reduzierung der magnetischen Nachwirkung sowie der bei höheren Aussteuerungen auftretenden Störeinflüsse durch Abbau des für Amorphlegierungen typischen "freien Volumens" durch besondere Führung der Wärmebehandlung.

7) Reduzierung der Auswirkungen der magnetischen Nachwirkung sowie der bei höheren Aussteuerungen auftretenden Störeinflüsse durch Aufbau einer möglichst hohen Anisotropieenergie $K_u$ .

Da der ausnutzbare konstante Arbeitsbereich der $\mu(H_{dc})$- Kennlinie von der Größe der Anisotropiefeldstärke

$$H_a = B_s / (\mu_o * \mu_r) \tag{4}$$

abhängt, muß die Legierungszusammensetzung in Kombination mit der Querfeldwärmebehandlung so festgelegt sein, daß einerseits die Sättigungsinduktion möglichst hoch, andererseits die Permeabilität möglichst niedrig ist. Da aber nach Glchg. 1 eine besonders niedrige Permeabilität mit einer Vergrößerung der Windungszahl N ausgeglichen werden muß, ist bei Legierungsauswahl und Wärmebehandlung ein Kompromiß aus hoher Anisotropiefeldstärke und hinreichend hoher Permeabilität zu finden.

Mit dem erfindungsgemäßen Legierungssystem lassen sich unter Einhaltung der oben genannten Bedingungen Übertragerkerne mit besonders linearen Hystereseschleifen herstellen, die alle normgerechten Eigenschaften besitzen. Kerne mit besonders guten Eigenschaften ergeben sich, wenn die Legierung möglichst wenig Mn enthält, eine zweite ferromagnetische Komponente wie z.B. Ni in der Legierung besitzt und / oder eine Kristallisationstemperatur besitzt, die (gemessen mit DSC, Aufheizrate 10 K/min) über 430 °C liegt.

**Beispiele:** Die oben genannten Anforderungen und Legierungsbereiche werden nach geeigneter Wärmebehandlung z.B. durch die in Tabelle 2 aufgeführten Legierungen bzw. durch die in Tabelle 3 aufgeführten Legierungs-Kernkombinationen erfüllt.

Tab.2

| Legierung [at %] | Sättigungsinduktion [T] | Anisotropiefeidstärke $H_a$ [A/cm] | Sättigungsmagnetostriktion $\lambda_s$ | | Kristallisationstemperatur [°C] |
|---|---|---|---|---|---|
| | | | as quenched | wärmebehandelt | |
| $Co_{71.7}Fe_{1.1}Mo_1Mn_4Si_{13.2}B_9$ | 0.82 | 1,5 | $-12*10^{-8}$ | $-3,5*10^{-8}$ | 480 |
| $Co_{72.5}Fe_{1.5}Mo_{0.2}Mn_4Si_{4.8}B_{17}$ | 1,0 | 3,5 | $-12*10^{-8}$ | $-4,1*10^{-8}$ | 470 |
| $Co_{72.8}Fe_{4.7}Si_{5.5}B_{17}$ | 0,99 | 4,8 | $-32*10^{-8}$ | $-1,6*10^{-8}$ | 500 |
| $Co_{55.6}Fe_{6.1}Mn_{1.1}Si_{4.3}B_{16.2}Ni_{16.5}$ | 0,93 | 8,0 | $-110*10^{-8}$ | $+4,2*10^{-8}$ | 432 |

Tab. 3

| $L_{haupt}$ [mH] | $I_{dc,max}$ [mA] | Legierung | Kernabmessung [mm$^3$] | Kernmasse [g] | Windungs-zahl |
|---|---|---|---|---|---|
| 5.2 | 80 | $Co_{72.8}Fe_{4.7}Si_{5.5}B_{17}$ | $9.8 \times 6.5 \times 4.5$ | 1.18 | $2 \times 62$ |
| 5.2 | 100 | $Co_{556}Fe_{6.1}Mn_{1.1}Si_{4.3}B_{16.2}Ni_{16.5}$ | $9.8 \times 6.5 \times 4.5$ | 1.19 | $2 \times 78$ |
| 5.2 | 60 | $Co_{72.8}Fe_{4.7}Si_{5.5}B_{17}$ | $8.2 \times 5.0 \times 3.0$ | 0.63 | $2 \times 69$ |
| 5.2 | 60 | $Co_{55.6}Fe_{6.1}Mn_{1.1}Si_{43}B_{16.2}Ni_{16.5}$ | $7.4 \times 5.0 \times 3.0$ | 0.45 | $2 \times 97$ |
| 5.2 | 37 | $Co_{72.8}Fe_{4.7}Si_{5.5}B_{17}$ | $7.0 \times 5.0 \times 2.0$ | 0.24 | $2 \times 101$ |
| 5.2 | 44 | $Co_{55.6}Fe_{6.1}Mn_{1.1}Si_{4.3}B_{16.2}Ni_{16.5}$ | $7.0 \times 5.0 \times 2.0$ | 0.24 | $2 \times 128$ |
| 6.0 | 80 | $Co_{72.5}Fe_{1.5}Mo_{0.2}Mn_4Si_{4.8}B_{17}$ | $9.8 \times 6.5 \times 4.5$ | 1.18 | $2 \times 60$ |
| 6.0 | 60 | $Co_{72.5}Fe_{1.5}Mo_{0.2}Mn_4Si_{4.8}B_{17}$ | $12.0 \times 6.0 \times 1.5$ | 0.81 | $2 \times 80$ |
| 6.5 | 60 | $Co_{71.7}Fe_{1.1}Mo_1Mn_4Si_{13.2}B_9$ | $11.0 \times 6.5 \times 5.3$ | 2.08 | $2 \times 37$ |
| 7.0 | 60 | $Co_{72.8}Fe_{4.7}Si_{5.5}B_{17}$ | $9.8 \times 6.5 \times 4.5$ | 1.18 | $2 \times 74$ |
| 10 | 60 | $Co_{72.8}Fe_{4.7}Si_{5.5}B_{17}$ | $9.2 \times 5.0 \times 4.0$ | 1.18 | $2 \times 75$ |
| 10 | 60 | $Co_{55.6}Fe_{6.1}Mn_{1.1}Si_{4.3}B_{16.2}Ni_{16.5}$ | $8.2 \times 5.0 \times 4.0$ | 0.84 | $2 \times 104$ |
| 10 | 36 | $Co_{72.8}Fe_{4.7}Si_{5.5}B_{17}$ | $7.0 \times 5.0 \times 3.5$ | 0.42 | $2 \times 106$ |
| 10 | 35 | $Co_{55.6}Fe_{6.1}Mn_{1.1}Si_{4.3}B_{16.2}Ni_{16.5}$ | $8.0 \times 6.0 \times 2.0$ | 0.28 | $2 \times 191$ |
| 13 | 60 | $Co_{728}Fe_{4.7}Si_{5.5}B_{17}$ | $10.1 \times 5.0 \times 4.0$ | 1.53 | $2 \times 80$ |
| 13 | 60 | $Co_{55.6}Fe_{6.1}Mn_{11}Si_{4.3}B_{16.2}Ni_{16.5}$ | $9.0 \times 5.0 \times 4.0$ | 1.12 | $2 \times 109$ |
| 13 | 34 | $Co_{728}Fe_{4.7}Si_{5.5}B_{17}$ | $7.0 \times 5.0 \times 4.0$ | 0.48 | $2 \times 113$ |
| 13 | 33 | $Co_{55.6}Fe_{6.1}Mn_{11}Si_{4.3}B_{16.2}Ni_{16.5}$ | $8.0 \times 6.0 \times 2.5$ | 0.35 | $2 \times 193$ |
| 26 | 60 | $Co_{556}Fe_{6.1}Mn_{11}Si_{4.3}B_{16.2}Ni_{16.5}$ | $11.0 \times 6.5 \times 1.7$ | 2.24 | $2 \times 200$ |
| 26 | 30 | $Co_{556}Fe_{6.1}Mn_{1.1}Si_{4.3}B_{16.2}Ni_{16.5}$ | $7.5 \times 5.5 \times 4.5$ | 0.58 | $2 \times 206$ |
| 50 | 60 | $Co_{556}Fe_{6.1}Mn_{1.1}Si_{4.3}B_{16.2}Ni_{16.5}$ | $14.0 \times 6.5 \times 5.7$ | 4.37 | $2 \times 168$ |
| 50 | 30 | $Co_{556}Fe_{6.1}Mn_{11}Si_{4.3}B_{16.2}Ni_{16.5}$ | $9.6 \times 6.5 \times 4.5$ | 1.12 | $2 \times 184$ |
| 80 | 60 | $Co_{556}Fe_{6.1}Mn_{1.1}Si_{4.3}B_{16.2}Ni_{16.5}$ | $17.0 \times 6.5 \times 5.7$ | 7.01 | $2 \times 152$ |
| 80 | 30 | $Co_{55.6}Fe_{6.1}Mn_{1.1}Si_{4.3}B_{16.2}Ni_{16.5}$ | $10.1 \times 5.0 \times 4.5$ | 1.73 | $2 \times 139$ |
| 80 | 30 | $Co_{71.7}Fe_{1.1}Mo_1Mn_4Si_{13.2}B_9$ | $20.0 \times 12.5 \times 8.0$ | 9.72 | $2 \times 110$ |

**Patentansprüche**

1.  Gleichstromvorbelastbarer Schnittstellenübertrager mit einer Hauptinduktivität von 2 bis 80 mH für ein digitales Übertragungssystem mit einem Magnetkern mit Primär- und Sekundärwicklungen, der aus einer weichmagnetischen, zumindest zu 70% amorphen Legierung hergestellt ist, die eine flache, möglichst lineare BH-Schleife und eine Zusammensetzung gemäß der Formel

$$Co_a(Fe_{1-c}Mn_c)_bNi_dM_eSi_xB_yC_z$$

aufweist, wobei M eines oder mehrere Elemente aus der Menge V, Nb, Ta, Cr, Mo, W, Ge, P ist und die Indizes a bis z in Atom % angegeben sind und den folgenden Bedingungen:

$$40 \leq a < 82 \qquad 0 \leq e \leq 5$$

$$3 \leq b \leq 10 \qquad 0 \leq x \leq 15$$

$$0 \leq c \leq 1 \qquad 8 \leq y \leq 26$$

$$0 \leq d \leq 30 \qquad 0 \leq z \leq 3$$

mit der Maßgabe 15 < e + x + y + z < 30 genügen,
**dadurch gekennzeichnet,**
**daß** der Magnetkern ein Ringbandkern ist, dessen Band eine mittlere Rauhtiefe $R_a$ von Bandober- und unterseite von weniger als 8% der Banddicke aufweist.

**2.** Gleichstromvorbelastbarer Schnittstellenübertrager nach Anspruch 1,
**dadurch gekennzeichnet,**
**daß** die Legierung eine Zusammensetzung aufweist, die folgenden Bedingungen:

$$50 \leq a \leq 82 \qquad e \leq 3$$

$$c \leq 0,5 \qquad x \geq 1$$

$$d \leq 20 \qquad y < 20$$

mit der Maßgabe 18 < e + x + y + z < 25 genügen.

**3.** Gleichstromvorbelastbarer Schnittstellenübertrager nach Anspruch 1 oder 2,
**dadurch gekennzeichnet,**
**daß** der Ringbandkern ungeschlitzt ist.

**4.** Gleichstromvorbelastbarer Schnittstellenübertrager nach einem der Ansprüche 1 bis 3,
**dadurch gekennzeichnet,**
**daß** das Band eine mittlere Rauhtiefe $R_a$ von Bandober- und unterseite von weniger als 2,5% der Banddicke aufweist.

**5.** Gleichstromvorbelastbarer Schnittstellenübertrager nach einem der Ansprüche 1 bis 4,
**dadurch gekennzeichnet,**
**daß** für die Sättigungsmagnetostriktion $|\lambda_S| < 0,5$ ppm gilt.

**6.** Gleichstromvorbelastbarer Schnittstellenübertrager nach Anspruch 5,
**dadurch gekennzeichnet,**
**daß** für die Sättigungsmagnetostriktion $|\lambda_S| < 0,1$ ppm gilt.

**7.** Gleichstromvorbelastbarer Schnittstellenübertrager nach einem der Ansprüche 1 bis 6,
**dadurch gekennzeichnet,**
**daß** die Kristallisationstemperatur oberhalb von 410°C liegt.

**8.** Verfahren zum Herstellen eines Ringbandkerns für einen gleichstromvorbelastbaren Schnittstellenübertrager gemäß Anspruch 5 oder 6 mit folgenden Schritten:

a) Es wird ein weichmagnetisches, zumindest zu 70% amorphes Band aus einer Schmelze mittels Rascherstarrung gegossen;
b) das Band wird spannungsfrei zu einem Ringbandkern gewickelt;
c) der gewickelte Ringbandkern wird in einem Magnetfeld parallel zur Rotationssymmetrieachse des Ringbandkerns in einer Schutzgasatmosphäre einer Wärmebehandlung unterzogen, wobei die Ringbandkerne anschließend mit 0,1 bis 5 K/min wieder abgekühlt werden,

**dadurch gekennzeichnet,**
**daß** die Ringbandkerne mit einer Rate von 1 bis 10 K/min auf eine Temperatur 220°C ≤ T ≤ 400°C aufgeheizt werden und daß die Ringbandkerne für eine Wärmebehandlungszeit 0,5 Stunden ≤ t ≤ 48 Stunden in diesem Temperaturbereich gehalten werden.

**9.** Verfahren nach Anspruch 8,
**dadurch gekennzeichnet,**
**daß** die Ringbandkerne anschließend oberflächlich passiviert und/oder beschichtet und/oder wirbelgesintert werden und/oder gekapselt werden.

**Claims**

**1.** Interface transformer, which can be DC-biased, having a main inductance of 2 to 80 mH for a digital transmission system with a magnet core having primary and secondary windings, which is produced from a soft-magnetic, at least 70% amorphous alloy, which has a flat BH loop, which is as linear as possible, and has a composition in accordance with the formula:

$$Co_a (Fe_{1-c}Mn_c)_b Ni_d M_e Si_x B_y C_z$$

where M is one or more elements from the set V, Nb, Ta, Cr, Mo, W, Ge, P and the indices a to z are quoted as % by atomic weight and satisfy the following conditions:

$$40 \leq a \leq 82 \qquad 0 \leq e \leq 5$$

$$3 \leq b \leq 10 \qquad 0 \leq x \leq 15$$

$$0 \leq x \leq 1 \qquad 8 \leq y \leq 26$$

$$0 \leq d \leq 30 \qquad 0 \leq z \leq 3$$

subject to 15 < e + x + y + z < 30,
**characterized**
**in that** the magnet core is an annular strip core, whose strip has a mean roughness depth $R_a$ on the strip top face and bottom face of less than 8% of the strip thickness.

**2.** Interface transformer, which can be DC-biased, according to Claim 1,
**characterized**
**in that** the alloy has a composition which satisfies the following conditions:

$$50 \leq a < 82 \qquad e \leq 3$$

$$c \leq 0.5 \qquad x \geq 1$$

$$d \leq 20 \qquad Y \leq 20$$

subject to 18 < e + x + y + z < 25.

3. Interface transformer, which can be DC-biased, according to Claim 1 or 2,
   **characterized**
   **in that** the annular strip core is not slotted.

4. Interface transformer, which can be DC-biased, according to one of Claims 1 to 3,
   **characterized**
   **in that** the strip has a mean roughness depth $R_a$ on the strip top face and bottom face of less than 2.5% of the strip thickness.

5. Interface transformer, which can be DC-biased, according to one of Claims 1 to 4,
   **characterized**
   **in that** the saturation magnetostriction is $|\lambda_s| < 0.5$ ppm.

6. Interface transformer, which can be DC-biased, according to Claim 5,
   **characterized**
   **in that** the saturation magnetostriction is $|\lambda_s| < 0.1$ ppm.

7. Interface transformer, which can be DC-biased, according to one of Claims 1 to 6,
   **characterized**
   **in that** the crystallization temperature is above 410°C.

8. Method for producing an annular strip core for an interface transformer which can be DC-biased, according to Claim 5 or 6, having the following steps:

   a) a soft-magnetic, at least 70% amorphous strip is cast from a melt by means of rapid solidification;
   b) the strip is wound without any stress to form an annular strip core;
   c) the wound annular strip core is subjected to heat treatment in a barrier gas atmosphere and in a magnetic field parallel to the rotational axis of symmetry of the annular strip core, with the annular strip cores then being cooled down once again at 0.1 to 5 K/min,

   **characterized**
   **in that** the annular strip cores are heated up to a temperature of 220°C $\leq$ T $\leq$ 400°C at a rate of 1 to 10 K/min, and in that the annular strip cores are kept in this temperature range for a heat treatment time of 0.5 hours $\leq$ t $\leq$ 48 hours.

9. Method according to Claim 8,
   **characterized**
   **in that** the surfaces of the annular strip cores are then passivated and/or coated and/or vortex-sintered and/or encapsulated.


**Revendications**

1. Transformateur d'interface à courant continu comportant une inductance principale de 2 à 80 mH pour un système de transformateur numérique comprenant un noyau magnétique avec des enroulements primaires et secondaires, ce noyau étant réalisé en un alliage à aimantation douce, amorphe à au moins 70 %, ayant une boucle (BH) plate, aussi linéaire que possible et une composition correspondant à la formule :

$$Co_a(Fe_{1-c}Mn_c)_bNi_dM_eSi_xB_yC_z$$

dans laquelle
M représente un ou plusieurs éléments de l'ensemble V, Nb, Ta, Cr, Mo, W, Ge, P, et les indices a-z indiquent des pourcentages atomiques et correspondent aux relations suivantes :

$$40 \leq a \leq 82 \qquad 0 \leq e \leq 5$$

$$3 \le b \le 10 \qquad 0 \le x \le 15$$

$$0 \le c \le 1 \qquad 8 \le y \le 26$$

$$0 \le d \le 30 \qquad 0 \le z \le 3$$

avec l'indication suivante $15 < e + x + y + z < 30$,
**caractérisé en ce que**
le noyau magnétique est un noyau à bande enroulée dont la bande a une rugosité moyenne $R_a$ des faces supérieure et inférieure de la bande qui représente moins de 8 % de l'épaisseur de la bande.

2. Transformateur d'interface à courant continu selon la revendication 1,
**caractérisé en ce que**
l'alliage a une composition respectant les relations suivantes :

$$50 \le a \le 82 \qquad e \le 3$$

$$c \le 0{,}5 \qquad x \ge 1$$

$$d \le 20 \qquad y \le 20$$

avec la relation suivante $18 < e + x + y + z < 25$.

3. Transformateur d'interface à courant continu selon l'une quelconque des revendications 1 ou 2,
**caractérisé en ce que**
les noyaux à ruban enroulé ne sont pas fendus.

4. Transformateur d'interface à courant continu selon l'une quelconque des revendications 1 à 3,
**caractérisé en ce que**
le ruban a une rugosité moyenne $R_a$ des surfaces supérieure et inférieure de la bande inférieure à 2,5 % de l'épaisseur de la bande.

5. Transformateur d'interface à courant continu selon l'une quelconque des revendications 1 à 4,
**caractérisé en ce que**
pour la magnétostriction de saturation on a la relation $|\lambda_s| < 0{,}5$ ppm.

6. Transformateur d'interface à courant continu selon la revendication 5,
**caractérisé en ce que**
pour la magnétostriction de saturation on a la relation $|\lambda_s| < 0{,}1$ ppm.

7. Transformateur d'interface à courant continu selon l'une quelconque des revendications 1 à 6,
**caractérisé en ce que**
la température de cristallisation est supérieure à 410°C.

8. Procédé de fabrication d'un noyau à ruban enroulé pour un transformateur d'interface à courant continu selon l'une quelconque des revendications 5 ou 6 et comprenant les étapes suivantes :

a) on coule avec refroidissement rapide un ruban à aimantation douce amorphe à au moins 70 % à partir d'un produit en fusion,
b) on enroule le ruban sans contrainte pour former un noyau à ruban enroulé,
c) on soumet le noyau à ruban enroulé à un champ magnétique parallèle à l'axe de symétrie de rotation du noyau à ruban enroulé dans une atmosphère de gaz protecteur, à un traitement thermique et ensuite on refroidit les noyaux à ruban enroulé à une vitesse de 0,1-5 K/min,

**caractérisé en ce qu'**
on chauffe les noyaux à ruban enroulé à une vitesse de 1 à 10 K/min à une température T telle que 220°C $\leq$ $\leq$ T 400°C et
on maintient les noyaux à ruban enroulé à une température dans cette plage pendant une durée de traitement thermique t telle que 0,5 heure $\leq$ t $\leq$ 48 heures.

9. Procédé selon la revendication 8,
**caractérisé en ce qu'**
ensuite on effectue la passivation en surface des noyaux à ruban enroulé et/ou les revêt et/ou on les fritte par des courants de Foucault et/ou les encapsule.